# EUROPEAN PATENT SPECIFICATION

(11) **EP 3 261 774 B1**
(45) Date of publication and mention of the grant of the patent: **23.12.2020**
(21) Application number: 16754805.6
(22) Date of filing: 23.02.2016
(51) Int. Cl.: B03C 3/017, B03C 3/14, C04B 18/08, B07B 4/02, B07B 13/04, B07B 13/08, B01D 46/00, B01D 45/00, B01D 49/00, B01D 50/00, B07B 7/00, B03B 9/04, B03C 3/019, B03C 3/02, B03C 3/145, B07B 7/01

(54) **METHOD AND ARRANGEMENT FOR HANDLING OF MATERIAL CLASSIFIED AS WASTE AND BEING IN THE FLUE GAS OF A POWER STATION.**
VERFAHREN UND ANORDNUNG ZUR HANDHABUNG VON IN RAUCHGAS EINER KRAFTWERK ENTHALTENEN ALS ABFALL EINGESTUFTEM MATERIAL.
PROCÉDÉ ET SYSTÈME PERMETTANT DE GÉRER UN MATÉRIAU CLASSÉ COMME DÉCHET ET SE TROUVANT DANS LES GAZ DE COMBUSTION D'UNE STATION DE PRODUCTION D'ÉNERGIE.

(30) Priority: 23.02.2015 FI 20155116
(43) Date of publication of application: 03.01.2018
(73) Proprietor: Fatec Oy, 71800 Siilinjärvi (FI)
(72) Inventor: HEIKKINEN-MUSTONEN, Aino, 71800 Siilinjärvi (FI); PAAVOLA, Tuomo, 71870 Harjamäki (FI)
(74) Representative: Salomäki, Juha Kari Ensio
(86) International application number: PCT/FI2016/050114
(87) International publication number: WO 2016/135383

(56) References cited:
- EP-A1- 0 734 754
- EP-A1- 0 734 754
- WO-A1-98/36844
- WO-A1-2014/041246
- WO-A1-2014/041246
- JP-A- H02 217 711
- JP-A- H02 217 711
- JP-A- 2000 140 686
- US-A- 5 024 169
- US-A- 5 024 169
- SENNECA O. ET AL.: 'Burning and physico-chemical characteristics of carbon in ash from a coal fired power plant.' FUEL vol. 87, no. 7, 22 February 2008, pages 1207 - 1216, XP022495857 DOI: 10.1016/J.FUEL.2007.07.033

## Description

The object of the invention is a method as defined in the preamble of claim 1 and an arrangement as defined in the preamble of claim 10 for the handling of a material classified as waste, the material being in the flue gases of a power station, such as the handling of fly ash.

The method and the arrangement according to the invention, i.e. more briefly the solution, are extremely well suited for handling and conditioning various materials classified as waste, such as e.g. the fly ash and volcanic material produced as a by-product of power stations, for instance coal-fired power stations, into products fit for further refining. One extremely suitable object for handling is the fly ash produced as a by-product of coal-fired power stations, which fly ash generally nowadays is taken as waste to landfill sites, but which can, according to the invention, be used when sorted into small grain sizes and ground e.g. as an additive to cement in the manufacture of concrete, as an additive to grouting material and also as an additive to plaster. Methods for removing or classifying fly ashes either directly by removing them from flue gasses, or at a later stage, are known for example respectively from documents EP0734754 A1 or WO2014/041246 A1.

Fly ash is already used according to prior art for the aforementioned applications, but the results have not necessarily been sufficiently good, because the fly ash has generally been used as it is, without sorting in any way, in which case e.g. concrete, in which unsorted fly ash has been used as an additive, has been improved in terms of quality only to some extent or not at all. Cements supplemented with fly ash contain, in solutions according to prior art, generally approx. 15-35% fly ash.

In coal-fired power stations e.g. electrostatic precipitators that are known in the art are used for separating fly ash from the flue gases. After separation, the separated fly ash material, comprising fractions of different grain sizes, is typically conducted to one storage location, where the fractions of different grain sizes are mixed together, in which case the end result is fly ash comprising a mix of both very small grains and of grains that are too large for many recycling uses. This fly ash is exactly the same material as the aforementioned fly ash that is used *as is,* and it can also be called untreated fly ash. The use of untreated fly ash is typically seasonal, the amounts used are limited and, given the strict technical limit values set, the advantage to be gained has been small.

Efforts have been made to refine fly ash also with solutions based on scrubbing technology, but these solutions are expensive and, in addition, a drying process for the fly ash must be added on.

The aim of the present invention is to eliminate the aforementioned drawbacks and to achieve an inexpensive, simple and reliable method and arrangement for the handling of a material classified as waste that is in the flue gases of a power station, such as the handling of fly ash. In this case the aim is to try to increase e.g. the reuse of fly ash in the concrete industry, in the manufacture of various concretes, including weather-resistant concretes, and also at the same time to reduce the amount of fly ash and other industrial waste being taken to landfill sites and other waste tips. The method according to the invention is characterized by what is disclosed in the characterization part of claim 1. Correspondingly, the arrangement according to the invention is characterized by what is disclosed in the characterization part of claim 10. Other embodiments of the invention are characterized by what is disclosed in the other claims.

The solution according to the invention preferably comprises a method and an arrangement for the handling of a material classified as waste, the material being in the flue gases of a power station, such as the handling of fly ash, in which solution the material classified as waste is separated from the flue gases by means of electrostatic precipitators and is conditioned for use e.g. as an additive in the manufacture of cement, concrete, plaster and/or grouting material. In the solution according to the invention an electrostatic precipitator arrangement comprising one or more electrostatic precipitators is used, by means of which arrangement the material classified as waste is separated from the flue gases as more than one fraction, the fractions having grain sizes of different magnitudes, which fractions are conducted from the electrostatic precipitators into their own sorting hoppers or corresponding temporary storage spaces for further handling, in which case the finer fractions are taken after carbon removal directly to their storage locations and the coarser fractions are graded and, if necessary, ground into smaller fractions and only then transferred to their storage locations.

One great advantage of the solution according to the invention is getting materials that would otherwise be classified as waste and handled as waste, such as e.g. fly ash, into reuse economically and extremely inexpensively. In this case one advantage, among others, is a reduction in the CO₂ emissions produced in the concrete industry by the manufacture of cement, because less cement is needed for the manufacture of concrete when some of the cement is replaced with very well sorted fly ash. This does not, however, succeed so well with unsorted fly ash. Roughly estimated, approx. 100 kg of fly ash replaces approx. 30 kg of cement.

According to the invention, a material classified as waste, such as e.g. fly ash, that has been handled and sorted according to its grain size, can be called a micronized product, for which competing products are, *inter alia,* untreated fly ash according to prior art and silicon dioxide i.e. silica (SiO₂). With the solution according to the invention e.g. the following advantages are obtained: The manufactured products are of homogeneous quality and technically reliable. In addition, products manufactured in this way replace using more natural materials, and also replace using more cement. One advantage is also that the sorting precision and technical quality of the sorted product are better, and also the usage amount needed in the manufacture of concrete is smaller than with conventional fly ash, in which case raw material costs, transport costs and energy costs can be reduced, the ecological footprint is smaller than with conventional fly ash, and also a product according to the invention is certified.

One advantage of the solution according to the invention is also its inexpensiveness and the fact that waste handling can be comprehensively and centrally managed, such as in waste handling plants.

In the following, the invention will be described in greater detail by the aid of some embodiments and by referring to the attached simplified drawings, wherein
- Fig. 1: presents a simplified diagram of one solution according to the invention,
- Fig. 2: presents a sectioned, diagrammatic and simplified side view of one sorting line, according to the invention, for fly ash or corresponding waste material,
- Fig. 3: presents a diagrammatic and simplified top view of one sorting line assembly, according to the invention, for fly ash or corresponding waste material,
- Fig. 4: presents a diagrammatic and simplified side view of one handling device, for fly ash or corresponding waste material, to be used in the arrangement according to the invention,
- Fig. 5: presents a diagrammatic and simplified sample of recently mixed fresh concrete, and
- Fig. 6: presents the sampling point presented with dot-and-dash lines in Fig. 5, significantly magnified and in diagrammatic form.

In the solution according to the invention the fly ash in the flue gases of a power station, which fly ash is generally counted as waste material, is processed in such a way that it is no longer classified as waste. In the solution according to the invention fly ash is sorted and graded for achieving the desired essentially precise grain size distribution. If necessary, the material is ground smaller and delivered again to the grain size sorting. It is advantageous to condition the fly ash obtained from the flue gases of one furnace of a power station e.g. into a product comprising essentially only one grain size, because the flue gas composition of each furnace is characteristic to that specific furnace. It is also possible to produce from one furnace fly ash products of different grain sizes, which products are kept each in their own reservoirs for future use. In addition to, or instead of, the flue gases of a power station, material usable for recycling can also be separated with the solution according to the invention from the flue gases of other incinerating plants, so that all the material in the flue gases would not simply go to waste. These types of other incinerating plants are e.g. incinerating plants using oil shale and incinerating plants using biofuels. The flue gases of these comprise also material classified as waste other than fly ash.

In the solution according to the invention the electrostatic precipitators used in the removal of waste material from the flue gases in power stations, for instance coal-fired power stations, or other incinerating plants are utilized in such a way that in connection with electrostatic precipitation the fly ash divided into fractions that are different in grain size is processed after electrostatic precipitation according to the specific grain size, and the different grain sizes are no longer allowed to mix with each other according to the practice known in the art. In this case very inexpensively and with small equipment modifications, fly ash of good quality and uniform grain size for exactly the desired purpose, e.g. as an additive to cement, is obtained. Fly ash of a specific grain size is therefore best suited for a precisely known purpose.

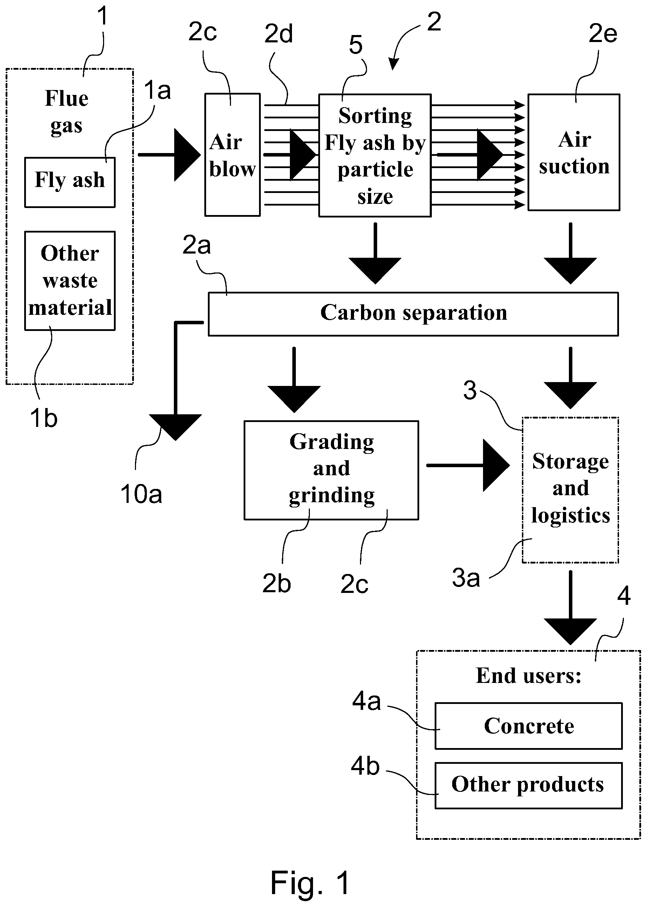

Fig. 1 presents one arrangement according to the invention as a simplified diagram. It presents the sorting 2 of flue gases 1 containing fly ash 1a, and other material 1b classified as waste, according to grain size, e.g. by using as an aid an electrostatic precipitator arrangement 5 comprising one or more electrostatic precipitators in such a way that after sorting by electrostatic precipitator the finer-grained material is conducted, either directly or preferably after carbon removal 2a, as a finished product 3a containing fly ash to product storage, to its storage location 3, and the coarser-grained material is conducted to carbon removal 2a as well as to grading and grinding 2b, after which the material ground to a sufficiently small grain size is conducted onwards as a finished product 3a containing fly ash to product storage, to its storage location 3, from where the product material 3a sorted by grain size is delivered to end users 4, e.g. for the manufacture of cement and/or concrete 4b and/or for some other use 4b suited to the purpose.

Fig. 1 also presents more particularly a carbon removal process 2a used for separating carbon, which process can be e.g. a fluidization process wherein the material comprising fly ash and carbon particles is treated by means of air in such a way that the carbon particles and fly ash particles separate from each other. The carbon particles are conducted after separation out of the process along a channel 10a and the fly ash particles that were in the carbon removal process 2a are conducted onwards to a grading and grinding process 2b. Carbon removal 2a can also be implemented with a screen, particularly when processing coarser fly ash particles, and removal can also be performed electrically, particularly when handling fly ash particles of smaller size.

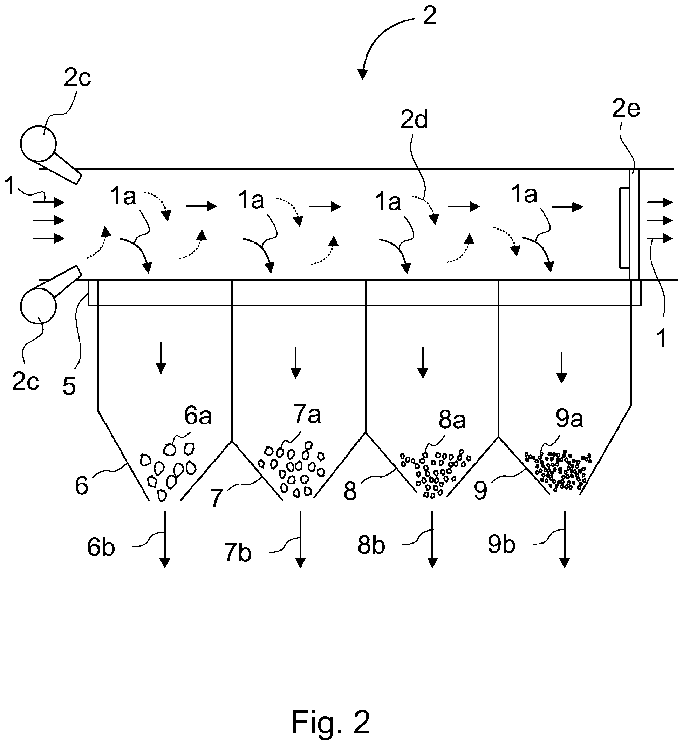

Fig. 2 presents a sectioned, diagrammatic and simplified side view of one sorting process 2, according to the invention, for fly ash or corresponding waste material. In this case the fly ash 1a that is the material being sorted is separated from the flue gas 1 and sorted by means of a electrostatic precipitator arrangement 5 according to the invention e.g. into four different grain size classes, but there can just as well be e.g. 2, 3, 5, 6 or even more grain size classes. The material to be sorted, e.g. fly ash 1a, is guide along a feeder channel pushed by the air current to the electrostatic precipitators of the electrostatic precipitator arrangement 5, by means of which electrostatic precipitators the fly ash 1a is sorted by grain size into different fractions in such a way that the material 6a that is coarser in grain size settles into the first sorting hopper 6, the material 7a that is next finer in grain size settles into the second sorting hopper 7, the material 8a that is next finer again in grain size settles into the third sorting hopper 8, and the finest material 9a settles into the last sorting hopper 9.

In the electrostatic precipitators of the electrostatic precipitator arrangement are adjustment devices for adjusting the electrical charges of the electrostatic precipitators in such a way that each electrostatic precipitator can have its own electrical charge, which can be the same as in the other electrostatic precipitators or it can also be of a different magnitude. The grain size sorting of fly ash 1a in the electrostatic precipitators of the electrostatic precipitator arrangement 5 is implemented mainly by adjusting the electrical charges of the electrostatic precipitators. The larger the electrical charge is, the better the electrostatic precipitator attracts fly ash particles 1a to itself in the flue gas flow. In this case only the coarser-grained and heavier particles drop into the first sorting hoppers 6 and 7 in the flow direction while the smaller and lighter particles travel along with the flue gas flow and additional air flow and are also pulled by electrical charges of different magnitudes to the sorting hoppers 8 and 9 that are farther. By suitably adjusting the electrical charges of the electrostatic precipitators of the electrostatic precipitator arrangement 5, the largest possible amount of fly ash of exactly the right grain size is obtained in each sorting hopper 6-9 or other corresponding temporary storage space.

The arrangement also has means boosting the air flow, which means are disposed near the electrostatic precipitators. One or more fans 2c, with which additional air 2d is blown into the mix of flue gas 1 and fly ash 1a, are disposed in the flue gas channel before the electrostatic precipitators in the flow direction. Preferably the additional air 2d is blown from different directions so that vortices occur in the air flow or gas flow, the vortices helping to better separate the fly ash particles from each other and transporting the small and light particles more easily farther forwards in the air flow.

The air flow is also, either alternatively or in addition, boosted with suction apparatus 2e, with which a suction effect is produced in the flue gas flow 1, the suction effect pulling in particular the small and light fly ash particle more easily farther forwards in the air flow 2d. In this way the efficiency of sorting fly ash according to grain size is enhanced.

The objective with the solution according to the invention is to get e.g. approx. 40-50% of the type of fine-grained fly ash that is of suitable grain size as an additive *as is* in the manufacture of e.g. concrete, cement, plaster and/or grouting material separated from the flue gas 1. Correspondingly, at the same time approx. 60-50% of the type of coarser-grained fly ash that is of suitable grain size as an additive e.g. for further processing, i.e. for grading or grinding, or also *as is* for some other use, such as e.g. earthworks, can be separated. The ashes derived from biomaterials in particular are suited for this purpose.

The composition and grain sizes of the fly ash 1a depend on the incinerating plant used. Depending on the case, it can be that of the total amount of fly ash sorted, approx. 40-50% fly ash that is of a grain size small enough for the manufacture of concrete, cement, plaster and/or grouting material is obtained in conjunction with electrostatic precipitation from the two sorting hoppers 8 and 9 containing finer-grained fly ash 8a, 9a, and approx. 60-50% of the total amount of fly ash is obtained for other use or for further processing from the two sorting hoppers 6 and 7 containing coarser-grained fly ash 6a, 7a, or it can also be that of the total amount of fly ash sorted, approx. 40-50% fly ash that is of a grain size small enough for the manufacture of concrete, cement, plaster and/or grouting material is obtained from the three sorting hoppers 7, 8 and 9 containing finer-grained fly ash 7a, 8a, 9a, and approx. 60-50% of the total amount of fly ash is obtained for other use or for further processing from the one sorting hopper 6 containing coarser-grained fly ash 6a.

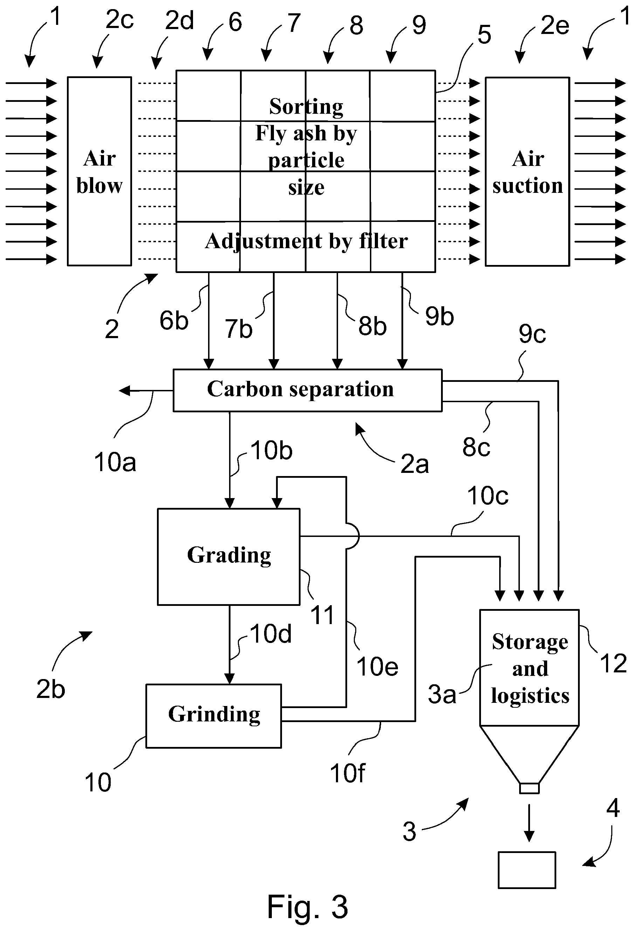

Fig. 3 presents a diagrammatic and simplified top view of a broader entity of one sorting line assembly, according to the invention, for fly ash 1a or corresponding waste material. There are e.g. a number of sorting hoppers 6-9 one beside another in connection with the electrostatic precipitators of an electrostatic precipitator arrangement 5, in the case of the embodiment four side-by-side, but there can just as well be also 2, 3, 5, 6, 7, 8 or even more one beside another. There can also be one of each.

In the third and fourth sorting hoppers 8 and 9 is material, e.g. fly ash, that is so fine in grain size that the material in question is conducted after separation performed by the electrostatic precipitators of the electrostatic precipitator arrangement 5 directly, without treating it further, from the hoppers 8 and 9 along the channels 8b and 9b to the storage container 12 in the storage location 3 of the finished product 3a. Although the material of fine and small grain size in the sorting hoppers 8 and 9 can also be conducted, at least in certain cases, from the electrostatic precipitators directly to the storage container 12, it is, however, advantageous to remove as many carbon particles as possible from the material before the material is transferred to the storage container 12. The removal of carbon is performed in a carbon removal process 2a, which for fine-grained material 8a, 9a it is advantageous to perform with the electrical carbon removal means of the arrangement. After carbon removal 2a the fine-grained fly ash material 8a, 9a is transported to a storage container 12 along the channels 8c and 9c.

In the first sorting hoppers 6 after separation with the electrostatic precipitators has occurred is the material that is coarsest in the grain size of the fly ash and in the second sorting hoppers 7 the next coarsest material. These materials are conducted along the channels 6b and 7b first to carbon removal 2a, which for such coarse material is preferably performed by means of a screen or by means of aeration, i.e. fluidization, where the fly ash material is divided according to the size and weight of the grains into two fractions in such a way that the fly ash particles and the carbon particles separate from each other. The carbon particles separated in carbon removal 2a are removed from the process via a channel 10a and the remaining material is conducted to the grader 11 along a channel 10b.

From the grader 11 the smaller-grained fraction is conducted along a channel 10c to the storage container 12 in the storage location 3 of the finished product 3a, and the larger-grained fraction is conducted along a channel 10d to grinding 10, onwards from where the smaller-grained fraction is conducted along a channel 10f to the storage container 12 in the storage location 3 of the finished product 3a and the larger-grained fraction is conducted along a channel 10e to a grader 11 for resorting.

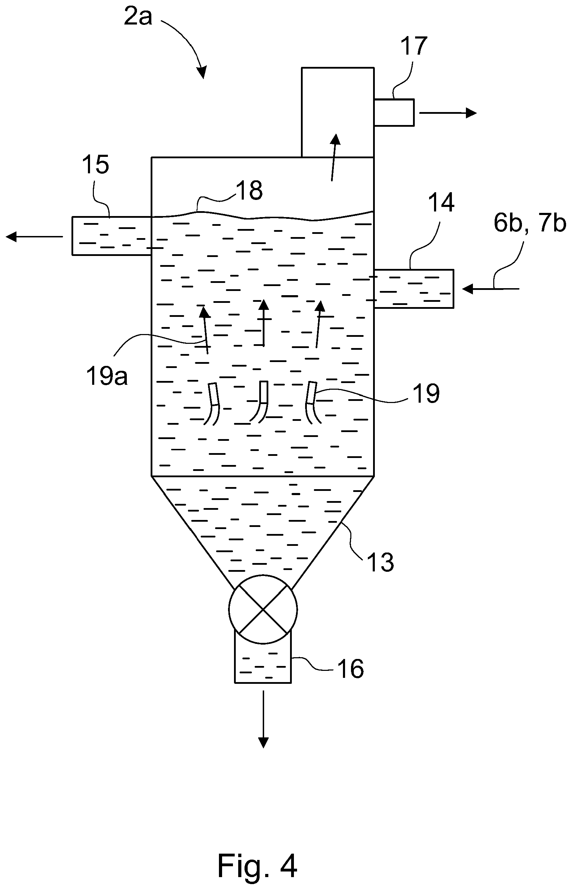

Fig. 4 presents a diagrammatic and simplified side view of one handling device, i.e. a carbon removal device 2a, for fly ash or corresponding waste material 1a, to be used in the arrangement according to the invention, in which handling device the coarser-grained waste material 6a, 7a is fluidized by means of air in a vessel 13 that is conical from its top part and funnel-shaped from its bottom part in such a way that the carbon particles separate from the actual fly ash material, after which the separated carbon particles are conducted out of the process. In the top part of the vessel 13 is an input branch coupling 14 for material to be treated, via which coupling the material is conducted into the vessel. Inside the vessel 13 are air nozzles 19 directed upwards, via which an air flow 19a traveling upwards through the material fed inside is brought about inside the vessel. In the top part of the vessel 13 are one or more exhaust air apertures 17 for outgoing air. In addition, there is a first output branch coupling 15 and a second output branch coupling 16 in the vessel. The first output branch coupling 15 is higher than the input branch coupling 14 and on essentially the opposite side to it. Correspondingly, the second output branch coupling 16 is below the input branch coupling 14 and preferably on the base of the bottom part of the funnel-shaped vessel 13.

The coarser-grained waste material 6a, 7a is conducted into the vessel 13 along the channels 6b and/or 7b and is fed into the vessel 13 via the input branch coupling 14 disposed in the top part of the vessel. At the same time air is blown from below upwards into the material fed in. The material to be handled is fed into the vessel 13 and removed from the vessel 13 at a speed at which the top surface 18 of the material in the vessel remains all the time at essentially the same level and also at essentially the level of the top surface of the first output branch coupling 15. In this case the input speed of the material is in the right proportion with regard to the output speed of the material. The feeding in and removal of material is implemented e.g. by means of a screw, but it can be implemented also with pressure or by gravity or in some other suitable manner. Also rotary valves and double dump valves, as well as other suitable devices, can be used.

The particles of different sizes and different weights in the vessel 13 separate from each other by means of the natural separating property of fluidized material in such a way that the lighter particles rise to the surface of the material and the heavier materials settle at the bottom of the vessel 13. The material that has separated to the surface is removed via the first output branch coupling 15 and the material that has settled at the bottom is removed via the second output branch coupling 16. The amount of carbon contained in the flue gases of a coal-fired power station and the quality of said carbon is specific to the plant, and from which output branch coupling 15, 16 carbon is removed and from which fly ash is removed depends on the composition of the flue gases. This adjustment is performed at each power plant on a case-by-case basis and remains the same as long as the composition of the flue gases remains the same.

The end result of the solution according to the invention is one product that is composed of fly ash that is of the desired magnitude in grain size and of uniform quality and that is well suited for use in the manufacture of e.g. concrete, cement, plaster and/or grouting material.

What is essential to the solution according to the invention is that a product that is exactly the desired size in terms of its grain size is made from waste material, such as from fly ash, by grinding and sorting. For example one product at a time and from one power plant only one product in terms of its grain size, which product is manufactured easily and inexpensively in conjunction with treating the flue gases of the power plant by connecting the handling apparatus according to the arrangement, together with its graders 11, grinding apparatus 10, carbon removal apparatus 2a, and channeling 6b-9b, 10a-10f, to the existing electrostatic precipitator system.

The material traveling via all the channelings 6b-9b, 10a-10f, i.e. lines, is stored as an end product 3a in one and the same product silo 12 or in a number of product silos 12 that are side-by-side in such a way that the finer-grained material 8a and 9a received directly from the electrostatic precipitators of the electrostatic precipitator arrangement 5 without other grain size sorting, as well as the unbroken fly ash particles of the fine-grained material received from the grader 11, are mixed with the fly ash material ground with the grinding apparatus 10, the larger particles of which ground fly ash have been broken by grinding into smaller particles. As already mentioned above, the selection as to whether material goes directly into a product silo 12 or via a grader and/or a grinding device into a product silo 12 is made in connection with the electrostatic precipitators by dividing the material by means of the electrostatic precipitators into different sorting hoppers 6-9 and via them into different channels 6b-9b.

Table 1 presents an extract from one test result, in which fly ash was sorted with a test device of the type of the method and of the arrangement according to the invention. In it, Product 1 is essentially unsorted coarse input material and Product 5 is the most fine-grained material of all. Four different percentage by volume values are presented in the vertical columns: D10, which corresponds to 10%; D50, which corresponds to 50%; D97, which corresponds to 97%; and D100, which corresponds to 100%. The decimal figures presented in the columns are the grain sizes of the material in micrometers (µm).

**Table 1**

| | **Volume %** | **Volume %** | **Volume %** | **Volume %** |
|---|---|---|---|---|
| **Product** | **10 (D10)** | **50 (D50)** | **97 (D97)** | **100 (D100)** |
| Product 1 | 1.82 µm | 16.44 µm | 99.16 µm | 225.00 µm |
| Product 2 | 1.33 µm | 7.54 µm | 36.39 µm | 71.00 µm |
| Product 3 | 0.90 µm | 2.86 µm | 13.94 µm | 60.00 µm |
| Product 4 | 0.86 µm | 1.98 µm | 7.20 µm | 50.00 µm |
| Product 5 | 0.84 µm | 1.46 µm | 2.85 µm | 4.00 µm |

For example, if looking at the lowermost Product 5, it is seen that in the sorting 100% of all the material has gone through the screen, the aperture size of which is 4 µm, i.e. in the sorted product the largest grain size is 4 µm. Generally, however, a more important criterion is considered to be a grain size with the value D97, which in most cases is sufficient instead of D100, and the product is usually evaluated with the value D50, with which the average fineness of the grain size of the product is determined. From Table 1 it is seen that the average fineness D50 of Product 5 is thus 1.46 µm and more than 10% of the product is of material having a grain size of below 1 µm, i.e. some of the product already belongs to the nanometer scale in terms of its grain size.

The handling and sorting of fly ash and other usable waste material into products of exactly a certain size in terms of their grain size enables the inexpensive and appropriate productive re-use of these products in different applications, in which the use of materials not sorted in this way could not earlier have been implemented. For example, fly ash selected according to exactly the correct grain size as an additive to cement used in concrete, among other things, improves the quality of the concrete and lowers the price of concrete and also reduces the consumption of cement.

When fly ash sorted into precisely the correct grain size is used as an additive to the cement needed in the manufacture of concrete, less fly ash can be used than in solutions according to prior art for achieving the same end result, i.e. instead of 15-35% fly ash, only 2-14% is needed in the solution according to the invention. In this case the grain size of the fly ash is e.g. as follows: D50 is between 1-8 µm, D97 is between 2-40 µm and D100 is between 3-80 µm. Correspondingly, D10 is between 0.5-2 µm.

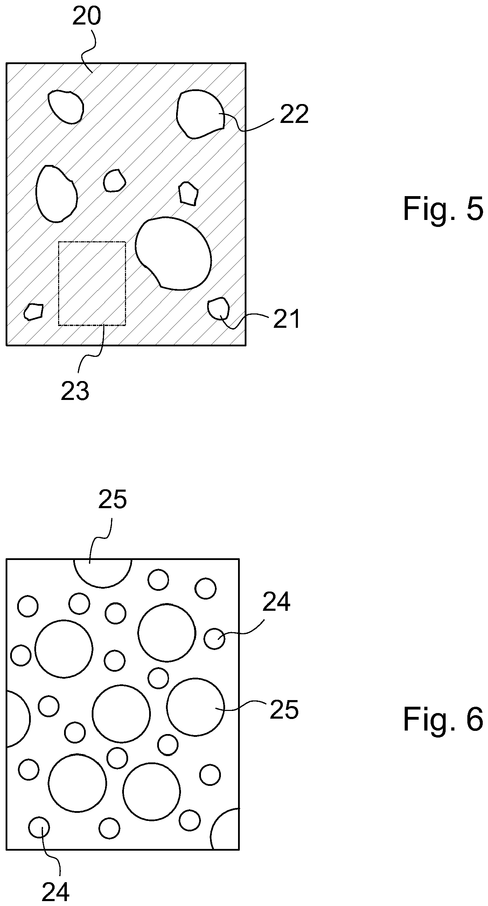

Figure 5 presents a diagrammatic and simplified sample of recently mixed fresh concrete, in which is both small stones 21 and larger stones 22 as a reinforcement in a mixture of cement gel 20, presented with diagonal lines, that is the binder agent. In addition, there can be metal reinforcements and other reinforcements in the concrete, but they are not presented in the figure. The sampling point 23, presented with dot-and-dash lines, and which is presented in much greater magnification in Fig. 6, is also added in Fig. 6.

The sample of concrete according to Fig. 6 is diagrammatic and simplified and it only presents how the particles, i.e. grains 24, of fly ash sorted according to the invention are situated between cement particles, i.e. cement grains 25, larger than them, condensing the structure of the cement mass functioning as a binder agent. Without fly ash grains 24 smaller in size than the cement grains 25, an unnecessary abundance of empty space, e.g. approx. 2-15%, would remain between the cement grains 25, which empty space weakens the structure. Fly ash that is smaller-grained than the cement grains 25 and that is correctly selected by grain size for the intended use and is used as an additive to the cement thus physically increases the reaction surface area of the particles of the mixture and thereby the strength of the cement and in this way strengthens concrete manufactured from cement to which the fly ash has been added, and the concrete becomes more workable and placeable. In addition, particles of small grain size replace the amount of water and cement to be used, because the empty spaces of the cement grains 25 would otherwise be filed with a cement-water mixture. This property also helps to conserve cement as a raw material. Likewise, among other things, drying cracks decrease and frost resistance improves when using small fly ash particles 24 that are pre-sorted by grain size mixed in with the cement particles 25.

According to prior art, when manufacturing cement the fly ash is added to the cement in the grinding phase of the cement. In this case, however, it is not necessarily possible to obtain fly ash of the correct size in terms of grain size with respect to the properties of the cement grade being manufactured at that particular time. According to the invention fly ash with a grain size that is of just the correct size is added to cement only in the final phase of the grinding of the cement or after it, in which case the grain size of the fly ash depends on the intended use of the cement. Thus larger-grained fly ash in terms of grain size is added to cement containing large cement grains 25 and smaller-grained fly ash in terms of grain size is added to cement containing smaller cement grains 25. In this way cement mixtures of good quality are obtained for different applications.

When manufacturing cement-based grouting materials for filling various gaps and cracks, such as concrete cracks or rock cracks, the solution according to the invention enables an extremely good end result, because the adding of fly ash used as an additive to cement or the adding of another suitable product manufactured from the aforementioned waste materials and sorted into suitable grain sizes is extremely easy according to the intended use. Often in this case fly ash that is smaller in its grain size than the cement grains 25 is added to the desired product according to the method presented by Fig. 5, said fly ash making the structure denser. The cement mixture can also be manufactured in such a way that the cement grains 25 are smaller in size than the fly ash grains 24, but in this case also it is essential that sorted fly ash with a known grain size is used.

According to the invention fly ash grains 24 smaller than the cement grains 25 are mixed into cement suited to the manufacture of concrete to fill the empty spaces between only the cement grains 25, in this case selected fly ash that is precisely sorted by its grain size on the basis of the cement grade desired is mixed into the cement, said fly ash being only approx. 2-14% of the amount of the cement, suitably e.g. approx. 3-12% and preferably e.g. approx. 5-10% or whatever suitable percentage whatsoever of the ranges presented above, i.e. 4, 6, 7, 8, 9, 11 or 13 percent or parts thereof. In this way the amount of fly ash to be used can thus, owing to the precise grain size sorting, be a lot smaller than the approx. 15-35% of the amount of the cement that is used according to prior art, when unsorted fly ash is used.

It is obvious to the person skilled in the art that different embodiments of the invention are not limited to the example described above, but that they may be varied within the scope of the claims presented below.

It is also obvious to the person skilled in the art that the fractions separated with electrostatic precipitators can be disposed separately from each other in any other suitable temporary storage space whatsoever, instead of in the aforementioned sorting hoppers, from which temporary storage space the material is taken for storage or for further processing.

## Claims

1. Method for the handling of a material (1a) classified as waste, the material being in the flue gases (1) of a power station, such as the handling of fly ash, in which method the material (1a) classified as waste is separated from the flue gases (1) by means of electrostatic precipitators and is conditioned for use e.g. as an additive in the manufacture of cement, concrete, plaster and/or grouting material, and in which method an electrostatic precipitator arrangement (5) comprising one or more electrostatic precipitators is used, by means of which arrangement the material (1a) classified as waste is separated from the flue gases as more than one fraction (6a, 7a, 8a, 9a), the fractions having grain sizes of different magnitudes, which fractions are conducted from the electrostatic precipitators into their own sorting hoppers (6, 7, 8, 9) or corresponding storage spaces for further processing and in conjunction with electrostatic precipitation, the separation of the material (1a) classified as waste from the flue gases and the sorting of said material is made more efficient by blowing additional air into the flue gas flow over the electrostatic precipitators and/or by bringing about additional suction into the flue gas flow over the electrostatic precipitators, **characterized in that** after electrostatic precipitation the coarser-grained fraction (6a, 7a) separated from the material (1a) is conducted to carbon removal (2a), in which carbon particles are separated from the material, which carbon particles are conducted away from the process along a channel (10a).

2. Method according to claim 1, **characterized in that** after electrostatic precipitation the material (1a) classified as waste is conditioned into a product containing the desired grain size by conducting the finer-grained fraction (8a, 9a) from the material (1a) separated from the flue gases (1), directly or via carbon removal (2a), to product storage, to its storage location (3) and the coarser-grained fraction (6a, 7a) via carbon removal (2a) as well as grading and/or grinding (2b) to product storage, to its storage location (3).

3. Method according to claim 1 or 2, **characterized in that**, in case that there are more than one electrostatic precipitator, in conjunction with electrostatic precipitation, the separation of the material (1a) classified as waste from the flue gases and the sorting of said material is made more efficient by adjusting the electrical charges of the different electrostatic precipitators of the electrostatic precipitator arrangement (5) in such a way that heavier material particles (1a) fall into the sorting hoppers (6, 7) that are first in the flow direction of the flue gases, and the lighter material particles (1a) fall into the sorting hoppers (8, 9) that are last in the flow direction of the flue gases.

4. Method according to claim 1, 2 or 3, **characterized in that** additional air is blown into the flue gas flow from more than one direction in such a way that at least some of the blowing directions cross each other.

5. Method according to any of the preceding claims, **characterized in that** the finer-grained fraction (8a, 9a) of the material (1a) separated from the flue gases (1) is conducted after separation to carbon removal (2a), which is performed electrically, and **in that** the coarser-grained fraction (6a, 7a) of the material (1a) separated from the flue gases (1) is conducted after separation to carbon removal (2a), which is performed by means of either a screen or fluidization, in which carbon removal (2a) carbon particles are separated from the material, which carbon particles are conducted away from the process along the channel (10a).

6. Method according to claim 5, **characterized in that** after carbon removal (2a) some of the material is conducted directly along channels (8c, 9c) to product storage, to its storage location (3), and some of the material is conducted to grading (11), where the material is divided into two different grain sizes, of which the finer-grained material is conducted along a channel (10c) to product storage, to its storage location (3) and the coarser-grained material is conducted along a channel (10d) to grinding (10).

7. Method according to claim 6, **characterized in that** after grinding (10) the coarser-grained part of the material is conducted along a channel (10e) to grading (11) and the finer-grained part of the material is conducted along a channel (10f) to product storage, to its storage location (3) .

8. Method according to any of the preceding claims, **characterized in that** the material classified as waste is sorted according to grain size into different products, the grain sizes of which are e.g. one or more of the following: D10 is between 0.5-2 µm; D50 is between 1-8 µm; D97 is between 2-40 µm and D100 is between 3-80 µm.

9. Method according to any of the preceding claims, **characterized in that** fly ash is mixed as an additive into cement to be used in the manufacture of concrete, the fly ash being 2-14% of the amount of cement.

10. Arrangement for the handling of a material (1a) classified as waste, the material being in the flue gases (1) of a power station, such as the handling of fly ash, in which arrangement the material classified as waste (1a) is arranged to be separated from the flue gases (1) by means of electrostatic precipitators and to be conditioned for use e.g. as an additive in the manufacture of cement, concrete, plaster and/or grouting material, which arrangement comprises an electrostatic precipitator arrangement (5) comprising one or more electrostatic precipitators, by means of which arrangement the material (1a) classified as waste is arranged to be separated from the flue gases into more than one fraction (6a, 7a, 8a, 9a), the fractions having grain sizes of different magnitudes, and in that the arrangement comprises one or more sorting hoppers (6, 7, 8, 9), or corresponding storage spaces, for each fraction being separated, which storage space is situated to receive the fractions separated in electrostatic precipitation in such a way that heavier material particles fall into the sorting hoppers (6, 7), or corresponding storage spaces, that are first in the flow direction of the flue gases, and the lighter material particles fall into the sorting hoppers (8, 9), or corresponding storage spaces, that are later in the flow direction of the flue gases, and the arrangement also comprises fan means (2c) for blowing additional air (2d) into the flue gas flow over the electrostatic precipitators of the electrostatic precipitator arrangement (5) and/or the arrangement comprises suction apparatus (2e) for bringing about additional suction over the electrostatic precipitators, **characterized in that** the arrangement comprises a carbon removal process (2a) for removing carbon particles from the material (1a) separated from the flue gases (1), to which carbon removal process (2a) the coarser-grained fraction (6a, 7a) separated from the material (1a) is conducted after electrostatic precipitation, in which carbon removal process (2a) carbon particles are arranged to be separated from the material and conducted away from the process along a channel (10a).

11. Arrangement according to claim 10, **characterized in that** the arrangement comprises adjustment means for adjusting the electrical charges for a specific electrostatic precipitator of the electrostatic precipitators of the electrostatic precipitator arrangement (5) in such a way that heavier material particles (1a) separated with electrostatic precipitators fall into the sorting hoppers (6, 7), or corresponding storage spaces, that are first in the flow direction of the flue gases, and the lighter material particles (1a) fall into the sorting hoppers (8, 9), or corresponding storage spaces, that are later in the flow direction of the flue gases.

12. Arrangement according to claim 10 or 11, **characterized in that** additional air is arranged to be blown into the flue gas flow from more than one direction in such a way that at least some of the blowing directions cross each other.

13. Arrangement according to any of the preceding claims 10-12, **characterized in that** for the finer-grained fraction (8a, 9a) the removal of carbon (2a) from the material (1a) separated from the flue gases (1) is adapted to be performed electrically, and for the coarser-grained fraction (6a, 7a) the removal of carbon (2a) from the material (1a) separated from the flue gases (1) is adapted to be performed by means of either a screen or fluidization, in which carbon removal (2a) carbon particles are separated from the material, which carbon particles are arranged to be conducted away from the process along the channel (10a).

14. Arrangement according to claim 13, **characterized in that** after carbon removal (2a) some of the material is arranged to be conducted directly along channels (8c, 9c) to product storage, to its storage location (3), and some of the material is arranged to be conducted to grading (11) for dividing the material into two different grain sizes, of which the finer-grained material is arranged to be conducted directly along a channel (10c) to product storage, to its storage location (3), and the coarser-grained material is arranged to be conducted along a channel (10d) to grinding (10).

## Patentansprüche

1. Verfahren zur Handhabung eines als Abfall klassifizierten Materials (1a), das sich in den Rauchgasen (1) eines Kraftwerks befindet, wie z.B. die Handhabung von Flugasche, bei welchem Verfahren das als Abfall klassifizierte Material (1a) mittels elektrostatischer Abscheider von den Rauchgasen (1) getrennt und für die Verwendung z.B. als ein Additiv bei der Herstellung von Zement, Beton, Putz und/oder Vergussmaterial konditioniert wird, und bei welchem Verfahren eine elektrostatische Abscheideranordnung (5) mit einem oder mehreren elektrostatischen Abscheidern verwendet wird, durch welche Anordnung das als Abfall klassifizierte Material (1a) von den Rauchgasen als mehr als eine Fraktion (6a, 7a, 8a, 9a) abgeschieden wird, wobei die Fraktionen unterschiedlich große Korngrößen haben, welche Fraktionen aus den Elektrofiltern in eigene Sortiertrichter (6, 7, 8, 9) oder entsprechende Lagerräume zur weiteren Verarbeitung und in Verbindung mit der elektrostatischen Abscheidung geleitet werden, das Abscheiden des als Abfall klassifizierten Materials (1a) aus den Rauchgasen und das Sortieren des Materials effizienter gemacht wird, indem zusätzliche Luft in den Rauchgasstrom über die elektrostatischen Abscheider eingeblasen wird und/oder indem ein zusätzliches Absaugen in den Rauchgasstrom über die elektrostatischen Abscheider bewirkt wird, **dadurch gekennzeichnet, dass** nach der elektrostatischen Abscheidung die vom Material (1a) abgeschiedene gröberkörnige Fraktion (6a, 7a) zur Kohlenstoffabscheidung (2a) geleitet wird, in der Kohlenstoffpartikel vom Material abgeschieden werden, wobei die Kohlenstoffpartikel entlang eines Kanals (10a) vom Prozess weggeleitet werden.

2. Verfahren nach Anspruch 1, **dadurch gekennzeichnet, dass** nach elektrostatischer Abscheidung das als Abfall klassifizierte Material (1a) zu einem Produkt mit gewünschter Korngrößekonditioniert wird, indem die feinkörnigere Fraktion (8a, 9a) aus dem aus den Rauchgasen (1) abgeschiedenen Material (1a) direkt oder über die Entkohlung (2a) zur Produktlagerung zu ihrem Lagerort (3) und die grobkörnigere Fraktion (6a, 7a) über die Entkohlung (2a) sowie das Klassieren und/oder Mahlen (2b) zur Produktlagerung zu ihrem Lagerort (3) geleitet wird.

3. Verfahren nach Anspruch 1 oder 2, **dadurch gekennzeichnet, daß** für den Fall, daß mehr als ein elektrostatischer Abscheider vorhanden ist, in Verbindung mit der elektrostatischen Abscheidung die Trennung des als Abfall klassifizierten Materials (1a) von den Rauchgasen und die Sortierung dieses Materials effizienter gemacht wird, indem die elektrischen Ladungen der verschiedenen elektrostatischen Abscheider der elektrostatischen Abscheideranordnung (5) so eingestellt werden, daß schwerere Materialteilchen (1a) in die Sortiertrichter (6) fallen, 7), die in der Strömungsrichtung der Rauchgase zuerst liegen, und die leichteren Materialpartikel (1a) fallen in die Sortiertrichter (8, 9), die in der Strömungsrichtung der Rauchgase zuletzt liegen.

4. Verfahren nach Anspruch 1, 2 oder 3, **dadurch gekennzeichnet, dass** zusätzliche Luft aus mehr als einer Richtung so in den Rauchgasstrom eingeblasen wird, dass sich zumindest einige der Einblasrichtungen kreuzen.

5. Verfahren nach einem der vorstehenden Ansprüche, **dadurch gekennzeichnet, dass** die feinkörnigere Fraktion (8a, 9a) des aus den Rauchgasen (1) abgeschiedenen Materials (1a) nach der Abscheidung zur Entkohlung (2a) geleitet wird, die elektrisch durchgeführt wird, und dass die grobkörnigere Fraktion (6a, 7a) des aus den Rauchgasen (1) abgeschiedenen Materials (1a) nach der Abscheidung zur Entkohlung (2a) geleitet wird, die entweder mittels eines Siebes oder einer Fluidisierung durchgeführt wird, bei der entkohlte Kohlenstoffpartikel (2a) aus dem Material abgetrennt werden, wobei die Kohlenstoffpartikel entlang des Kanals (10a) aus dem Prozess abgeführt werden.

6. Verfahren nach Anspruch 5, **dadurch gekennzeichnet, dass** nach dem Entfernen des Kohlenstoffs (2a) ein Teil des Materials direkt entlang von Kanälen (8c, 9c) zur Produktspeicherung zu seiner Lagerstelle (3) geleitet wird und ein Teil des Materials zur Sortierung (11) geleitet wird, wo das Material in zwei verschiedene Korngrößen unterteilt wird, von denen das feinkörnigere Material entlang eines Kanals (10c) zur Produktspeicherung zu seiner Lagerstelle (3) geleitet wird und das grobkörnigere Material entlang eines Kanals (10d) zum Mahlen (10) geleitet wird.

7. Verfahren nach Anspruch 6, **dadurch gekennzeichnet, dass** nach dem Mahlen (10) der grobkörnigere Teil des Materials entlang eines Kanals (10e) zur Sortierung (11) und der feinkörnigere Teil des Materials entlang eines Kanals (10f) zur Produktlagerung zu seiner Lagerstelle (3) geleitet wird.

8. Verfahren nach einem der vorstehenden Ansprüche, **dadurch gekennzeichnet, dass** das als Abfall klassifizierte Material nach Korngröße in verschiedene Produkte sortiert wird, deren Korngrößen z.B. eine oder mehrere der folgenden sind: D10 liegt zwischen 0,5-2µm; D50 liegt zwischen 1-8µm; D97 liegt zwischen 2-40µm and D100 liegt zwischen 3-80µm.

9. Verfahren nach einem der vorstehenden Ansprüche, **dadurch gekennzeichnet, dass** Flugasche als Zusatzstoff in Zement gemischt wird, der bei der Herstellung von Beton verwendet wird, wobei die Flugasche 2-14% der Zementmenge ausmacht.

10. Anordnung für die Handhabung eines als Abfall klassifizierten Materials (1a), wobei sich das Material in den Rauchgasen (1) eines Kraftwerks befindet, wie z.B. die Handhabung von Flugasche, in welcher Anordnung das als Abfall (1a) klassifizierte Material so angeordnet ist, daß es von den Rauchgasen (1) mittels elektrostatischer Abscheider abgeschieden und für den Gebrauch konditioniert wird, z.B. zur Verwendung als ein Additiv bei der Herstellung von Zement, Beton, Gips und/oder Vergussmaterial, wobei die Anordnung eine elektrostatische Abscheideranordnung (5) umfasst, die einen oder mehrere elektrostatische Abscheider umfasst, wobei mittels dieser Anordnung das als Abfall klassifizierte Material (1a) so angeordnet ist, dass es von den Rauchgasen in mehr als eine Fraktion (6a, 7a, 8a, 9a) abgeschieden wird, wobei die Fraktionen Korngrößen unterschiedlicher Größen aufweisen, und dass die Anordnung einen oder mehrere Sortiertrichter (6, 7, 8, 9) oder entsprechende Speicherräume für jede zu trennende Fraktion umfasst, wobei der Speicherraum so angeordnet ist, dass er die durch elektrostatische Abscheidung getrennten Fraktionen so aufnimmt, dass schwerere Materialpartikel in die Sortiertrichter (6, 7) oder entsprechende Speicherräume fallen, die in Strömungsrichtung der Rauchgase zuerst liegen, und die leichteren Materialpartikel in die Sortiertrichter (8, 9) fallen, oder in entsprechende Speicherräume, die nachfolgend in Strömungsrichtung der Rauchgase liegen, und die Anordnung auch Gebläsemittel (2c) zum Einblasen von Zusatzluft (2d) in den Rauchgasstrom über die Elektrofilter der Elektrofilteranordnung (5) umfasst und/oder die Anordnung eine Absaugvorrichtung (2e) zur Herbeiführung einer zusätzlichen Absaugung über den Elektrofiltern umfasst, **dadurch gekennzeichnet, dass** die Anordnung ein Kohlenstoffentfernungsverfahren (2a) zum Entfernen von Kohlenstoffteilchen aus dem aus den Rauchgasen (1) abgeschiedenen Material (1a) umfasst, wobei dem Kohlenstoffentfernungsverfahren (2a) die vom Material (1a) abgeschiedene grobkörnigere Fraktion (6a, 7a) nach der elektrostatischen Abscheidung zugeführt wird, wobei in dem Kohlenstoffentfernungsverfahren (2a) Kohlenstoffteilchen so angeordnet sind, dass sie vom Material abgeschieden und entlang eines Kanals (10a) aus dem Verfahren abgeführt werden.

11. Anordnung nach Anspruch 10, **dadurch gekennzeichnet, dass** die Anordnung Einstellmittel zum Einstellen der elektrischen Ladungen für einen bestimmten Elektroabscheider der Elektroabscheider der Elektroabscheideranordnung (5) in der Weise umfaßt, daß schwerere Materialteilchen (1a), die mit Elektroabscheidern abgeschieden wurden, in die Sortiertrichter (6, 7) fallen oder in entsprechende Lagerräume, die zuerst in Strömungsrichtung der Rauchgase liegen, und die leichteren Materialpartikel (1a) in die Sortiertrichter (8, 9) oder entsprechende Lagerräume, die später in Strömungsrichtung der Rauchgase liegen, fallen .

12. Anordnung nach Anspruch 10 oder 11, **dadurch gekennzeichnet, dass** zusätzliche Luft so angeordnet ist, dass sie aus mehr als einer Richtung so in den Rauchgasstrom eingeblasen wird, dass sich mindestens einige der Einblasrichtungen kreuzen.

13. Anordnung nach einem der vorstehenden Ansprüche 10-12, **dadurch gekennzeichnet, dass** für die feinkörnigere Fraktion (8a, 9a) die Entfernung von Kohlenstoff (2a) aus dem aus den Rauchgasen (1) abgeschiedenen Material (1a) elektrisch durchführbar ist, und für die grobkörnigere Fraktion (6a, 7a) die Entfernung von Kohlenstoff (2a) aus dem Material (1a), das von den Rauchgasen (1) abgetrennt wird, entweder durch ein Sieb oder durch Fluidisierung durchgeführt werden kann, wobei bei der Entfernung von Kohlenstoff (2a) Kohlenstoffpartikel aus dem Material abgetrennt werden, wobei die Kohlenstoffpartikel so angeordnet sind, dass sie entlang des Kanals (10a) aus dem Prozess abgeführt werden.

14. Anordnung nach Anspruch 13, **dadurch gekennzeichnet, dass** nach der Kohlenstoffentfernung (2a) ein Teil des Materials so angeordnet ist, dass es direkt entlang von Kanälen (8c, 9c) zur Produktlagerung zu seinem Lagerort (3) geleitet wird, und dass ein Teil des Materials so angeordnet ist, dass es zur Sortierung (11) geleitet wird, um das Material in zwei verschiedene Korngrößen zu teilen, von denen das feinkörnigere Material so angeordnet ist, dass es direkt entlang eines Kanals (10c) zur Produktlagerung, zu seiner Lagerstelle (3) geleitet wird, und das grobkörnigere Material so angeordnet ist, dass es entlang eines Kanals (10d) zum Mahlen (10) geleitet wird.

## Revendications

1. Procédé de gestion d'un matériau (1a) classé comme déchet, le matériau se trouvant dans les gaz de combustion (1) d'une centrale électrique, par exemple de gestion des cendres volantes, dans lequel procédé, le matériau (1a) classé comme déchet est séparé des gaz de combustion (1) au moyen de précipitateurs électrostatiques et est conditionné pour être utilisé, par exemple en tant qu'additif dans la fabrication de ciment, de béton, de plâtre et/ou de matériaux de scellement, et dans lequel procédé, un système de précipitateur électrostatique (5) comprenant un ou plusieurs précipitateurs électrostatiques est utilisé, au moyen dudit système, le matériau (1a) classé comme déchet est séparé des gaz de combustion sous la forme de plus d'une fraction (6a, 7a, 8a, 9a), les fractions présentant des tailles des particules de différentes amplitudes, lesquelles fractions sont amenées des précipitateurs électrostatiques vers leurs propres trémies de tri (6, 7, 8, 9) ou les espaces de stockage correspondants pour un traitement ultérieur et en conjonction avec la précipitation électrostatique, la séparation du matériau (1a) classé comme déchet des gaz de combustion et le tri dudit matériau sont rendus plus efficaces en soufflant de l'air supplémentaire dans le flux de gaz de combustion sur les précipitateurs électrostatiques et/ou en provoquant une aspiration supplémentaire dans le flux de gaz de combustion sur les précipitateurs électrostatiques, **caractérisé en ce qu'**après la précipitation électrostatique, la fraction à particules plus grossières (6a, 7a) séparée du matériau (1a) est amenée vers l'élimination de carbone (2a), les particules de carbone étant séparées du matériau, lesquelles particules de carbone sont éloignées du processus le long d'un canal (10a).

2. Procédé selon la revendication 1, **caractérisé en ce qu'**après la précipitation électrostatique, le matériau (1a) classé comme déchet est conditionné en un produit contenant la taille des particules souhaitée en amenant la fraction à particules plus fines (8a, 9a) du matériau (1a) séparé des gaz de combustion (1), directement ou à travers l'élimination de carbone (2a), vers le stockage du produit, vers son emplacement de stockage (3) et la fraction à particules plus grossières (6a, 7a) à travers l'élimination de carbone (2a) ainsi que le triage et/ou le broyage (2b) vers le stockage du produit, vers son emplacement de stockage (3).

3. Procédé selon la revendication 1 ou 2, **caractérisé en ce que**, dans le cas où il y a plus d'un précipitateur électrostatique, en conjonction avec la précipitation électrostatique, la séparation du matériau (1a) classé comme déchet des gaz de combustion et le tri dudit matériau sont rendus plus efficaces en ajustant les charges électriques des différents précipitateurs électrostatiques du système de précipitateur électrostatique (5) de telle sorte que les particules de matériau plus lourdes (1a) tombent dans les trémies de tri (6, 7) qui sont les premières dans le sens du flux des gaz de combustion et les particules de matériau plus légères (1a) tombent dans les trémies de tri (8, 9) qui sont les dernières dans le sens du flux des gaz de combustion.

4. Procédé selon la revendication 1, 2 ou 3, **caractérisé en ce que** de l'air supplémentaire est soufflé dans le flux de gaz de combustion à partir de plus d'une direction de telle sorte qu'au moins certaines des directions de soufflage se croisent.

5. Procédé selon l'une quelconque des revendications précédentes, **caractérisé en ce que** la fraction à particules plus fines (8a, 9a) du matériau (1a) séparé des gaz de combustion (1) est amenée après la séparation vers l'élimination de carbone (2a), qui est effectuée électriquement, et **en ce que** la fraction à particules plus grossières (6a, 7a) du matériau (1a) séparé des gaz de combustion (1) est amenée après la séparation vers l'élimination de carbone (2a), qui est effectuée au moyen d'un tamis ou d'une fluidisation, dans laquelle élimination de carbone (2a), les particules de carbone sont séparées du matériau, lesquelles particules de carbone sont éloignées du processus le long du canal (10a).

6. Procédé selon la revendication 5, **caractérisé en ce que**, après l'élimination de carbone (2a), une partie du matériau est amenée directement le long des canaux (8c, 9c) vers le stockage du produit, vers son emplacement de stockage (3), et une partie du matériau est amenée vers le triage (11), où le matériau est divisé en deux tailles de particules différentes, dont le matériau à particules plus fines est amené le long d'un canal (10c) vers le stockage du produit, vers son emplacement de stockage (3) et le matériau à particules plus grossières est amené le long d'un canal (10d) vers le broyage (10).

7. Procédé selon la revendication 6, **caractérisé en ce qu'**après le broyage (10), la partie à particules plus grossières du matériau est amenée le long d'un canal (10e) vers le triage (11) et la partie à particules plus fines du matériau est amenée le long d'un canal (10f) vers le stockage du produit, vers son emplacement de stockage (3).

8. Procédé selon l'une quelconque des revendications précédentes, **caractérisé en ce que** le matériau classé comme déchet est trié en fonction des tailles de particules en différents produits dont les tailles de particules sont par exemple l'une ou plusieurs des tailles suivantes :
D10 est comprise entre 0,5 et 2 µm ; et/ou
D50 est comprise entre 1 et 8 µm ; et/ou
D97 est comprise entre 2 et 40 µm et D100 est comprise entre 3 et 80 µm.

9. Procédé selon l'une quelconque des revendications précédentes, **caractérisé en ce que** des cendres volantes sont mélangées comme additif dans du ciment à utiliser dans la fabrication de béton, les cendres volantes représentant 2 à 14 % de la quantité de ciment.

10. Système de gestion d'un matériau (1a) classé comme déchet, le matériau se trouvant dans les gaz de combustion (1) d'une centrale électrique, par exemple de gestion des cendres volantes, dans ledit système, le matériau classé comme déchet (1a) est disposé pour être séparé des gaz de combustion (1) au moyen de précipitateurs électrostatiques et pour être conditionné afin d'être utilisé, par exemple, en tant qu'additif dans la fabrication de ciment, de béton, de plâtre et/ou de matériaux de scellement, lequel système comprend un système de précipitateur électrostatique (5) comprenant un ou plusieurs précipitateurs électrostatiques, au moyen dudit système, le matériau (1a) classé comme déchet est disposé pour être séparé des gaz de combustion sous la forme de plus d'une fraction (6a, 7a, 8a, 9a), les fractions présentant des tailles des particules de différentes amplitudes, et en ce que le système comprend une ou plusieurs trémies de tri (6, 7, 8, 9), ou des espaces de stockage correspondants, pour chaque fraction séparée, lequel espace de stockage est situé pour recevoir les fractions séparées en précipitation électrostatique de telle sorte que les particules de matériau plus lourdes tombent dans les trémies de tri (6, 7), ou les espaces de stockage correspondants, qui sont d'abord dans le sens du flux des gaz de combustion, et les particules de matériau plus légères tombent dans les trémies de tri (8, 9), ou les espaces de stockage correspondants, qui sont plus tard dans le sens du flux des gaz de combustion, et le système comprend également des moyens de ventilateur (2c) pour souffler de l'air supplémentaire (2d) dans le flux de gaz de combustion sur les précipitateurs électrostatiques du système de précipitateur électrostatique (5) et/ou le système comprend un appareil d'aspiration (2e) pour provoquer une aspiration supplémentaire sur les précipitateurs électrostatiques, **caractérisé en ce que** le système comprend un processus d'élimination de carbone (2a) pour éliminer les particules de carbone du matériau (1a) séparé des gaz de combustion (1), auquel processus d'élimination de carbone (2a), la fraction à particules plus grossières (6a, 7a) séparée du matériau (1a) est amenée après la précipitation électrostatique, dans lequel processus d'élimination de carbone (2a) les particules de carbone sont disposées pour être séparées du matériau et éloignées du processus le long d'un canal (10a).

11. Système selon la revendication 10, **caractérisé en ce que** le système comprend des moyens d'ajustement pour ajuster les charges électriques pour un précipitateur électrostatique spécifique des précipitateurs électrostatiques du système de précipitateur électrostatique (5) de telle sorte que les particules de matériau plus lourdes (1a) séparées avec les précipitateurs électrostatiques tombent dans les trémies de tri (6, 7), ou les espaces de stockage correspondants, qui sont d'abord dans la direction d'écoulement des gaz de combustion, et les particules de matériau plus légères (1a) tombent dans les trémies de tri (8, 9), ou les espaces de stockage correspondants, qui sont plus tard dans la direction d'écoulement des gaz de combustion.

12. Système selon la revendication 10 ou 11, **caractérisé en ce que** de l'air supplémentaire est disposé pour être soufflé dans l'écoulement de gaz de combustion à partir de plusieurs directions de telle sorte qu'au moins certaines des directions de soufflage se croisent.

13. Système selon l'une quelconque des revendications 10 à 12 précédentes, **caractérisé en ce que** pour la fraction à particules plus fines (8a, 9a), l'élimination de carbone (2a) du matériau (1a) séparé des gaz de combustion (1) est adaptée pour être effectuée électriquement, et pour la fraction à particules plus grossières (6a, 7a), l'élimination de carbone (2a) du matériau (1a) séparé des gaz de combustion (1) est adaptée pour être effectuée au moyen d'un tamis ou d'une fluidisation, dans laquelle élimination de carbone (2a) les particules de carbone sont séparées du matériau, lesquelles particules de carbone sont disposées pour être éloignées du processus le long du canal (10a).

14. Système selon la revendication 13, **caractérisé en ce que**, après l'élimination de carbone (2a), une partie du matériau est disposée pour être amenée directement le long des canaux (8c, 9c) vers le stockage du produit, vers son emplacement de stockage (3), et une partie du matériau est disposée pour être amenée vers le triage (11), pour diviser le matériau en deux tailles de particules différentes, dont le matériau à particules plus fines est disposé pour être amené le long d'un canal (10c) vers le stockage du produit, vers son emplacement de stockage (3) et le matériau à particules plus grossières est amené le long d'un canal (10d) vers le broyage (10).
